# EUROPÄISCHE PATENTSCHRIFT

(11) **EP 1 715 319 B1**
(45) Veröffentlichungstag und Bekanntmachung des Hinweises auf die Patenterteilung: **27.06.2012**
(21) Anmeldenummer: 06007971.2
(22) Anmeldetag: 18.04.2006
(51) Int. Cl.: G01L 11/02, G01M 9/06

(54) **Verfahren zur Bestimmung der Druckverteilung über einer Oberfläche und druckempfindliche Farbe zur Verwendung dabei**
Procedure for determining the pressure distribution on a surface and pressure sensitive paint used therefore
Procédé de détermination de la distribution de pression sur une surface et peinture sensible à la pression utilisée dans ce but

(30) Priorität: 19.04.2005 DE 102005018169
(43) Veröffentlichungstag der Anmeldung: 25.10.2006
(73) Patentinhaber: Deutsches Zentrum für Luft- und Raumfahrt e.V., 51147 Köln (DE)
(72) Erfinder: Engler, Rolf Dr., 37083 Göttingen (DE); Henne, Ulrich Dr., 37073 Göttingen (DE); Kompenhans, Jürgen Dr., 37130 Gleichen (DE); Klein, Christian Dr., 37085 Göttingen (DE)
(74) Vertreter: Rehberg Hüppe + Partner

(56) Entgegenhaltungen:
- EP-A- 0 558 771
- WO-A-96/41142
- DE-A1- 10 225 616
- GB-A- 2 283 752
- US-A1- 5 359 887
- US-A1- 2003 111 615
- ENGLER R H ET AL: "Pressure sensitive paint systems for pressure distribution measurements in wind tunnels and turbomachines" 1. Juli 2000 (2000-07-01), MEASUREMENT SCIENCE AND TECHNOLOGY, INSTITUTE OF PHYSICS PUBLISHING, BRISTOL, GB, PAGE(S) 1077-1085 , XP020062995 ISSN: 0957-0233 * das ganze Dokument *

## Beschreibung

Die Erfindung betrifft ein Verfahren zur Bestimmung der Druckverteilung über einer Oberfläche mit einer druckempfindlichen Farbe und mit den Merkmalen des Oberbegriffs des Patentanspruchs 1. Weiterhin betrifft die Erfindung eine druckempfindliche Farbe zur Verwendung bei dem Verfahren mit den Merkmalen des Oberbegriffs des Patentanspruchs 5 bzw. des inhaltsgleichen Oberbegriffs des Patentanspruchs 7.

### STAND DER TECHNIK

Eine druckempfindliche Farbe mit den Merkmalen der inhaltlich übereinstimmenden Oberbegriffe der Patentansprüche 5 und 7 ist aus Engler, R. H., und Klein, C. (1997) First Results using the new DLR-PSP-System - Intensity and Lifetime Measurements, in Conference "Wind Tunnels and Wind Tunnel Test Techniques" Cambridge, UK, ISBN 1857680480, bekannt. Diese druckempfindliche Farbe weist eine Matrix auf, in die druckempfindliche Moleküle und eine Referenzsubstanz eingebettet sind. Die Matrix ist im ausgehärteten Zustand der Farbe soweit sauerstoffdurchlässig, dass sich ein Sauerstoffpartialdruck in der Umgebung der Farbe binnen kurzer Zeit bis in die Matrix hinein ausbreitet. Die Matrix kann durch ein Silikonpolymer ausgebildet sein, das im ausgehärteten Zustand offenporig ist. Die druckempfindlichen Moleküle in der Matrix emittieren bei Anregung durch Anregungslicht Lumineszenzlicht, dessen Intensität von dem Sauerstoffpartialdruck abhängt. Die druckempfindlichen Moleküle können konkret aus einer Pyrenverbindung oder einem Pyrenderivat bestehen, bei der bzw. dem die Intensität des emittierten Lumineszenzlichts mit der Konzentration von Sauerstoff im Umfeld der druckempfindlichen Moleküle abnimmt. So ist die Intensität des Lumineszenzlichts von den druckempfindlichen Molekülen ein Maß für den Sauerstoffpartialdruck, und bei bekannter Sauerstoffkonzentration kann hieraus auf den Druck

In der Umgebung der Farbe geschlossen werden. Die Referenzsubstanz in der Matrix dient dazu, die Vertellung der intensität des Anregungslichts zu erfassen, von der die Intensität des Lumineszenzlichts von den druckempfindlichen Molekülen ebenfalls abhängig ist. Die Referenzsubstanz wird daher so ausgewählt, dass die intensität Ihrer Lumineszenz ausschließlich von der Intensität des Anregungslichts abhängt, d. h. nicht von Irgendeinem Druck. Die Referenzsubstanz kann Europlum als lumineszierendes Element aufweisen. Um das Lumineszenzlicht von den druckempfindlichen Molekülen und der Referenzsubstanz unterscheiden zu können, wird die Referenzsubstanz so auf die druckempfindliche Moleküle abgestimmt, dass sie Ihr Lumineszenzlicht In einem anderen Wellenlängenbereich emittiert. Die Unterscheldung des Lumineszenzlichts von der Referenzsubstanz und den druckempfindlichen Molekülen kann dann durch schmalbandige Bandpaßfilter vor einer Kamera bewirkt werden, mit der die Oberfläche betrachtet wird, über welcher die Druckvertellung bestimmt werden soll. Die Referenzsubstanz wird weiterhin nach dem Kriterlum ausgawählt, dass sie bezüglich Ihres Lumineszenzverhaltens auch unempfindlich gegenüber den unterschiedlichen Temperaturen Ist, wie sie in der Umgebung der druckempfindlichen Farbe auftreten. Zusätzlich kann dann eine weitere, selaktiv temperaturempfindliche Referenzsubstanz vorgesehen sein, um ergänzend die Temperaturvertellung über der Oberfläche zu bestimmen.

Um die bekannte druckempfindliche Farbe zur Bestimmung der Druckvertellung über einer Oberfläche zu verwenden, Ist aus Engler und Klein (s. o.) weiterhin ein Verfahren mit den Merkmalen des Oberbegriffs des Patentanspruchs 1 bekannt. Dabei wird eine Schicht aus der druckempfindlichen Farbe nicht direkt auf die Oberfläche eines Objekts aufgebracht. Vielmehr wird zunächst eine Abschirmschicht auf die Oberfläche aufgetragen, die die Oberfläche einheitlich einfärbt, um einen einheitlichen Hintergrund für die druckempfindliche Farbe zu schaffen. Die Abschirmschicht kann durch Partikel aus Titandioxid weiß eingefärbt sein, um einen durchgängig weißen Hintergrund für die druckempfindliche Farbe zu schaffen. Die druckempfindliche Farbe wird jedoch nicht direkt auf die Abschirmschicht aufgetragen, sondern unter Zwischenordnung einer Kontaktschlcht, um die Haftung der druckempfindlichen Farbe an der Abschirmschicht zu verbessern. Beim Aufbringen der druckempfindlichen Farbe auf die Kontaktschicht ist eine möglichst gleichmäßige Schichtdicke sicherzustellen, damit die Flächenkonzentrationen der druckempfindlichen Moleküle und der Referenzsubstanz auf der Oberfläche überall möglichst gleich sind. Außerdem stellt nur eine gleichmäßige Schichtdicke der Schicht aus der druckempfindlichen Farbe sicher, dass Effekte der unter ihr liegenden Abschirmschicht sich überall gleich auswirken, Um eine gleichmäßige Auftragung der druckempfindlichen Farbe zu erleichtern, ist es aus Engler und Klein (s. o.) bekannt, der druckempfindlichen Farbe ein blaues Farbpigment zuzusetzen. Wenn die Oberfläche in den interessierenden Bereichen mit der druckempfindlichen Farbe einheitlich blau eingefärbt ist, kann aufgrund der einheitlich weißen Farbe der darunter liegenden Abschirmschicht davon ausgegangen werden, dass die Schicht aus der druckempfindlichen Farbe überall ungefähr gleich dick ist. Das blaue Farbpigment ändert jedoch nichts daran, dass beim Erfassen der Intensität von Lumineszenzlicht von den druckempfindlichen Molekülen Lumineszenzlicht aus der gesamten Schicht der druckempfindlichen Farbe bis hinunter zu der Abschirmschicht erfasst wird. Alle Unterschiede bei der Dicke der Schicht der druckempfindlichen Farbe führen daher zu Intensitätsschwankungen bei der Intensität des erfassten Lumineszenzlichts. Zwar werden diese bei homogener Verteilung der druckempfindlichen Moleküle und der Referenzsubstanz in der druckempfindlichen Farbe durch die unterschiedlichen Intensitäten des Lumineszenzlichts von der Referenzsubstanz widergespiegelt, doch kann die Referenzsubstanz mangels eines einheitlichen Kalibrierungsfaktors nicht gleichzeitig für die exakte Bestimmung der Verteilung der Intensität des Anregungslichts und für die exakte Bestimmung der Verteilung der Schichtdicke der druckempfindlichen Farbe auf der Oberfläche verwendet werden. Es ist daher unbedingt wichtig, die Schichtdicke der druckempfindlichen Farbe auf der Oberfläche möglichst konstant zu halten. Dies bedeutet einen zusätzlichen Aufwand zu der bei dem bekannten Verfahren notwendigen Grundierung der Oberfläche mit der Abschirmschicht und der Kontaktschicht.

Die US 2003/011615 A1 offenbart ein Verfahren und eine Vorrichtung, um die Temperaturempfindlichkeit von druckempfindlichen Farben zu korrigieren. Hierzu wird auf eine Oberfläche, über der eine Druckverteilung bestimmt werden soll, zunächst eine Schicht aus einer temperaturempfindlichen Farbe aufgebracht. Auf diese Schicht wird dann eine Schicht aus einer druckempfindlichen Farbe aufgebracht. Beide Schichten reagieren auf unterschiedliche Temperatur bzw. unterschiedlichen Druck mit unterschiedlicher Lumineszenz. Dabei wird das Lumineszenzlicht von der Schicht aus der temperaturempfindlichen Farbe getrennt von dem Lumineszenzlicht von der Schicht aus der druckempfindlichen Farbe registriert, indem vor den jeweiligen Kameras entsprechende Wellenlängenfilter angeordnet sind.

Die WO 96/41142 A betrifft Formulierungen und Verfahren zur Verwendung von druckempfindlicher Farbe. Dabei wird die druckempfindliche Farbe auf eine zuvor mit einer weißen Grundierung behandelte Oberfläche aufgetragen. Die Schichtdicke der aufgetragenen druckempfindlichen Farbe beträgt vorzugsweise 10 bis 20 µm.

Die GB-A-2283752 offenbart eine Zusammensetzung für eine druckempfindliche Farbe mit den Merkmalen des Oberbegriffs des nebengeordneten Patentanspruchs 5.

### AUFGABE DER ERFINDUNG

Der Erfindung liegt die Aufgabe zugrunde, ein Verfahren mit den Merkmalen des Oberbegriffs des Patentanspruchs 1 und eine druckempfindliche Farbe mit den Merkmalen des Oberbegriffs des Patentanspruchs 5 bzw. 7 aufzuzeigen, mit denen das Vorbereiten einer Oberfläche mit der druckempfindlichen Farbe für das Bestimmen einer Druckverteilung über der Oberfläche deutlich vereinfacht wird, ohne dass es zu Einbußen bei der Genauigkeit der Bestimmung der Druckverteilung führt.

### LÖSUNG

Die Aufgabe der Erfindung wird durch ein Verfahren mit den Merkmalen des unabhängigen Patentanspruchs 1 sowie durch eine druckempfindliche Farbe mit den Merkmalen des Patentanspruchs 5 oder 7 gelöst. Vorteilhafte Ausführungsformen des neuen Verfahrens sind in den Unteransprüchen 2 bis 4 beschrieben. Vorteilhafte Ausführungsformen der neuen druckempfindlichen Farben finden sich in den Unteransprüchen 6 sowie 8 bis 12.

### BESCHREIBUNG DER ERFINDUNG

Bei dem neuen Verfahren wird Lumineszenzlicht nur von solchen Anteilen der druckempfindlichen Moleküle registriert, die sich in einer äußeren Teilschicht der Schicht aus der druckempfindlichen Farbe auf der Oberfläche befinden. D. h., die druckempfindliche Schicht wird nicht über ihre gesamte Dicke für die Bestimmung der Druckverteilung über der Oberfläche herangezogen. Vielmehr wird nur eine äußere Teilschicht der Schicht aus der druckempfindlichen Farbe betrachtet. Damit spielt weder die absolute Dicke der Schicht der druckempfindlichen Farbe auf der Oberfläche für die beobachtete Intensität des Lumineszenzlichts eine Rolle noch ein darunter liegender Hintergrund der druckempfindlichen Farbe an der oder auf der Oberfläche.

Solange beim Aufbringen der Schicht aus der druckempfindlichen Farbe auf die Oberfläche eine Mindestschichtdicke eingehalten wird und die Mindeserschichtdicke der Teilschicht mindestens so groß ist wie die Schichtdicke der Teilschicht, sind Schwankungen der Dicke der Schicht aus der druckempfindlichen Farbe für die Bestimmung der Druckverteilung über der Oberfläche damit unerheblich. Solange die Mindestschichtdicke eingehalten wird, muss beim Auftragen der druckempfindlichen Farbe daher keine besondere Sorgfalt angewandt werden, um ein gutes, d. h. genaues Ergebnis bei der Bestimmung der Druckverteilung über der Oberfläche zu erzielen.

Überdies kann die Schicht aus der druckempfindlichen Farbe direkt auf die Oberfläche aufgetragen werden, weil bei der Bestimmung der Druckverteilung über der Oberfläche der Hintergrund der druckempfindlichen Farben gar nicht "gesehen" wird. Es wird ausschließlich Licht aus der äußeren Teilschicht der Schicht aus der druckempfindlichen Farbe erfasst.

Die druckempfindliche Farbe kann bei dem neuen Verfahren einfach in homogener Zusammensetzung auf die Oberfläche aufgebracht werden. Für die Erfassung des Fluoreszenzlichts ausschließlich aus einer äußeren Teilschicht der Schicht aus der druckempfindlichen Farbe ist es beispielsweise nicht erforderlich, die druckempfindlichen Moleküle in dieser äußeren Teilschicht der druckempfindlichen Farbe zu konzentrieren.

Die sinnvolle Dicke der äußeren Teilschicht, aus der das Lumineszenzschicht ausschließlich registriert wird, hängt davon ab, in welcher Dicke die druckempfindliche Farbe überhaupt auf die Oberfläche aufgetragen werden soll. Grundsätzlich ist ein möglichst geringer Farbauftrag erwünscht, um sowohl mit der druckempfindlichen Farbe sparsam umzugehen, als auch die Oberfläche durch die druckempfindliche Farbe möglichst wenig zu verändern. Konkret beträgt die Schichtdicke der äußeren Teilschicht, aus der das Lumineszenzlicht ausschließlich registriert wird, zwischen 1 und 40 µm. Vorzugsweise beträgt diese Schichtdicke 5 bis 20 µm.

Um die Beschränkung bei der Registrierung des Lumineszenzlichts auf die äußere Teilschicht der Schicht der druckempfindlichen Farbe zu bewirken, könnten grundsätzlich Maßnahmen im Bereich der Erfassung des Lumineszenzlichts, wie beispielsweise konfokale Abbildungsanordnungen verwendet werden. Diese bereiten jedoch bei größeren Abständen einer Abbildungsoptik von der Oberfläche zunehmende Realisationsschwierigkeiten. Bei dem neuen Verfahren wird daher die Beschränkung bei der Erfassung des Lumineszenzlichts auf solches aus der äußeren Teilschicht der Schicht der druckempfindlichen Farbe durch eine neue druckempfindliche Farbebewirkt.

So wird die Beschränkung der Registrierung des Lumineszenzlichts aus der äußeren Teilschicht der Schicht der druckempfindlichen Farbe beispielsweise dadurch bewirkt, dass die Halbtransmissionsdicke der druckempfindlichen Farbe, bei der die Farbe 50 % der Intensität von einfallendem Licht durchlässt, bei der Wellenlänge des Anregungslichts und/oder bei der Wellenlänge des Lumineszenzlichts von den druckempfindlichen Molekülen maximal 20 µm und vorzugsweise maximal 10 µm beträgt. Bei einer Dicke der druckempfindlichen Farbe von 40 µm und einer Halbtransmissionsdicke von 10 µm wird nur ein Sechzehntel des einfallenden Lichts durchgelassen, was bereits im Wesentlichen vernachlässigbar ist. Zudem ist im Falle der Anregung von Lumineszenz von derselben Seite der Schicht aus der druckempfindlichen Farbe, an der das Lumineszenzlicht aufgefangen wird, zu berücksichtigen, dass nicht nur das Lumineszenzlicht auf seinem Weg aus der Tiefe der Schicht, sondern auch das Anregungslicht auf seinem Weg in die Tiefe der Schicht geschwächt wird. Hierdurch kommt es zu einer Potenzierung der Schwächung des Lumineszenzlichts aus der Tiefe der Schicht der druckempfindlichen Moleküle. In diesem Zusammenhang sei angemerkt, dass es für die vorliegende Erfindung nicht entscheidend ist, dass überhaupt kein Lumineszenzlicht registriert wird, das nicht aus der betrachteten Teilschicht der Schicht aus der druckempfindlichen Farbe stammt. Vielmehr ist es ausreichend, wenn alle relevanten Anteile des Lumineszenzlichts, das registriert wird, aus dieser Teilschicht stammen.

Die neue druckempfindliche Farbe ist grundsätzlich auch für eine Beleuchtung von unten geeignet, bei der das Anregen und das Auffangen von Lumineszenzlicht an einander gegenüberliegenden Seiten der Schicht aus der Farbe erfolgen.

Die neue druckempfindliche Farbe kann sich konkret dadurch auszeichnen, dass in die Matrix ein die Transmission der Farbe bei der Wellenlänge des Anregungslichts und/oder bei der Wellenlänge des Lumineszenzlichts begrenzende Partikel eingebettet sind, die durch das Anregungslicht nicht zu Lumineszenz angeregt werden. Vorzugsweise sind diese Partikel in solchen Anteilen vorhanden, dass die Halbtransmissionsdicke der Farbe wie oben angegeben maximal 20 µm beträgt; noch mehr ist eine Beschränkung der Halbtransmissionsdicke auf maximal 10 µm bevorzugt. Die Partikel, die die optische Dichte der druckempfindlichen Farbe erhöhen, sind nicht mit dem blauen Farbpigment zu verwechseln, das im Stand der Technik der druckempfindlichen Farbe zugesetzt wird, um die aufgetragene Schichtdicke optisch abzuschätzen. Dieses blaue Farbpigment ist vielmehr gerade so ausgewählt, dass es das Erfassen von Lumineszenzlicht aus der gesamten Dicke der Schicht der druckempfindlichen Farbe nicht behindert, und kann bei der neuen druckempfindlichen Farbe zusätzlich vorgesehen sein.

Die Partikel, mit denen die optische Dichte der Matrix erhöht wird, weisen eine messbare Teilchengröße von in aller Regel deutlich weniger bis 1 µm auf. Konkret können die Partikel, mit denen die Transmission der druckempfindlichen Farbe begrenzt wird, aus Titandioxid bestehen. Andere optisch inerte Partikel in ausreichend großen Anteilen sind ebenfalls verwendbar. Es ist jedoch nicht möglich, die Konzentration der druckempfindlichen Moleküle so zu erhöhen, dass die Halbtransmissionsdicke der Farbe in den gewünschten Bereich gelangt. Die Konzentration der druckempfindlichen Moleküle darf für die gewünschten Lumineszenzeigenschaften der druckempfindlichen Farbe ein gewisses Maß nicht übersteigen. Dies gilt insbesondere dann, wenn die druckempfindlichen Moleküle aus einer Pyrenverbindung oder einem Pyrenderivat bestehen. Andere, ebenfalls für die Verwendung in druckempfindlichen Farben an sich bekannte und auch bei der neuen druckempfindlichen Farbe verwendbare druckempfindliche Moleküle bestehen aus Rutheniumverbindungen oder -derivaten oder aus Porphyrenverbindungen oder -derivaten.

Grundsätzlich Ist auch daran zu denken, die Matrix der druckempfindlichen Farbe so zu modifizieren, dass die gewünschte Halbtransmissionsdicke eingestellt wird. Die bevorzugte Matrix besteht jedoch aus einem Silikonpolymer, das ohne den Zusatz von undurchsichtigen Partikeln, die seine optische Dichte deutlich erhöhen, die gewünschte kleine Halbtransmissionsdicke nicht erreicht.

Auch mit einer in die Matrix zusätzlich eingebetteten Referenzsubstanz, die durch das Anregungslicht zur Emission von Lumineszenzlicht angeregt wird, dessen Intensität von keinem Druck abhängig ist, wie er in der Umgebung der Referenzsubstanz potentiell auftritt, kann die gewünschte Halbtrensmissionsdicke nicht erreicht werden. Die Konzentration einer solchen Referenzsubstanz muss für die gewünschten Lumineszenzeigenschaften der druckempfindlichen Farbe ebenfalls In enge Grenzen gehalten werden. Dies gilt konkret dann, wenn die Referenzsubstanz Europlum aufweist, Insbesondere können unerwünschte Wechselwirkungen zwischen der Referenzsubstanz und den druckempfindlichen Molekülen bereits dann auftreten, wenn auch nur eine der beiden Substanzen In einer überhöhten Konzentration vorliegt.

Auch bei der neuen druckempfindlichen Farbe kann die Referenzsubstanz zusätzlich temperaturunempfindlich und mit einer weiteren, temperaturempfindlichen Referenzsubstanz kombiniert sein, um auch die Temperaturvertellung über der Jeweiligen Oberfläche erfassen zu können.

Vorteilhafte Weiterbildungen der Erfindung ergeben sich aus den abhängigen Patentansprüchen und der gesamten Beschreibung. Weitere Merkmale sind den Zeichnungen - Insbesondere den dergeotellten Geometrien und den relativen Abmessungen mehrerer Bauteile zueinander sowie deren relativer Anordnung und Wirkverbindung - zu entnehmen, Die Kombination von Merkmalen unterschiedlicher Ausführungsformen der Erfindung oder von Merkmalen unterschiedlicher Patentansprüche abweichend von den gewählten Rückbeziehungen Ist ebenfalls möglich und wird hiermit angeregt. Dies betrifft auch solche Merkmale, die In separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand eines in den Figuren dargestellten bevorzugten Ausführungsbeispiels weiter erläutert und beschrieben.
- **Fig. 1**: zeigt einen vergrößerten Querschnitt durch einen Abschnitt einer Oberfläche, auf die eine druckempfindliche Farbe aufgetragen ist, wobei ein Verfahren zur Bestimmung einer Druckvertellung über der Oberfläche angedeutet ist; und
- **Fig. 2**: zeigt einen vergrößerten Querschnitt durch einen größeren Bereich der Oberfläche gemäß Fig. 1.

### FIGURENBESCHREIBUNG

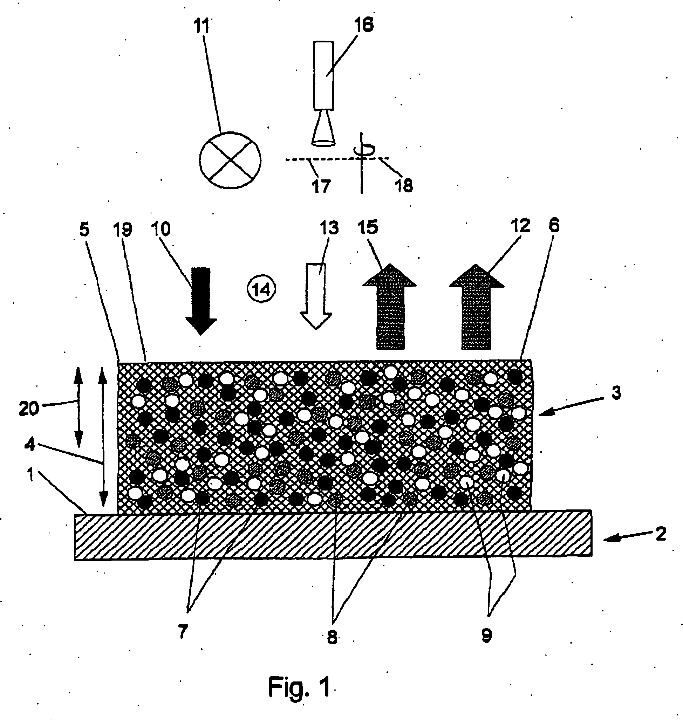

**Fig.1** zeigt eine Oberfläche 1 eines hier nicht weiter wiedergegebenen Objekts 2, über der eine Druckvertellung bestimmt werden soll. Zu diesem Zweck ist auf die Oberfläche 1 eine druckempfindliche Farbe 3 aufgetragen. Beim Auftragen der druckempfindlichen Farbe 3 auf die Oberfläche 1 wurde darauf geachtet, dass eine Dicke 4 der auf der Oberfläche 1 gebildeten Schicht 5 aus der druckempfindlichen Farbe 3 eine Mindestschichtdicke von 20 *µ*m nicht unterschreitet. Die druckempfindliche Farbe 3 umfasst eine Matrix 6, in die druckempfindliche Moleküle 7 (schwarze Punkte), eine Referenzsubstanz 8 (schraffierte Punkte) und Partikel 9 (weiße Punkte) eingebettet sind. Die druckempfindlichen Moleküle 7 bestehen hier aus einem Pyrenderivat, das bei Anregung durch Anregungslicht 10 von einer Anregungslichtquelle 11 Lumineszenzlicht 12 emittiert. Die Intensität des Lumlneazenzlichts 12 ist dabei von der Anwesenheit von Sauerstoff 13 Im Umfeld der druckempfindlichen Moleküle 7 abhängig. Da die Matrix 6 offenporig Ist und sich so der Druck In der Umgebung 14 der Oberfläche 2 In die Matrix 6 hinein ausbreiten kann, hängt die Intensität des Lumineszenzlichts 12 von dem Sauerstoffpartialdruck in der Umgebung 14 ab, der bei konstanter Sauerstoffkonzentration wiederum ein Maß für den Druck in der Umgebung 14 ist. So kann durch Betrachten der Intensität des Lumineszenzlichts 12 auf den Druck In der Umgebung 14 der Oberfläche 1 zurück geschlossen werden. Bel den druckempfindlichen Molekülen 7 aus dem Pyrenderivat ist es so, dass die Intensität des Lumineszenzlichts 12 mit zunehmender Konzentration an Sauerstoff im Umfeld der einzelnen Moleküle abnimmt. Die Intensität des Lumineszenzlichte 12 hängt neben der Anwesenheit von Sauerstoff im Umfeld der druckempfindlichen Moleküle 7 auch von der Intensität des Anregungslichts 10 ab, Um diese lokal zu erfassen, ist die Referenzsubstanz 8 vorgesehen. Die Referenzsubstanz 8 wird durch das Anregungslicht 10 ebenfalls zur Emission von Lumineszanzlicht 15 angeregt. Die Intensität des Lumineszenzlichts 15 ist aber ausschließlich von der Intensität des Anregungslichts 10 abhängig, d. h. nicht von irgendeinem Druck in der Umgebung 14 der Oberfläche 1. Das Lumineszenzlicht 15 unterscheidet sich in seiner Wellenlänge von dem Lumineszenzlicht 12. Dies macht es möglich, dass Lumineazenzlicht 15 getrennt von dem Lumineszenzlicht 12 mit einer Kamera 16 in Verbindung mit verschiedenen Filtern 17 und 18 aufzuzeichnen. Die Partikel 9 in der druckempfindlichen Farbe 3 haben die Funktion, die Halbtransmissionsdicke der druckempfindlichen Farbe 3, bei der die Farbe 3 50 % der Intensität von einfallendern Licht durchlässt, auf einen Wert von ca. 5 *µ*m zu begrenzen. Typischerweise liegt dieser Wert zwischen 1 und 10 *µ*m, maximal beträgt er 20 *µ*m. Diese Halbtransmissionsdicke der druckempfindlichen Farbe 3 führt dazu, dass beim Betrachten der Oberfläche 1 mit der Kamera 16 nur Lumineszenzlicht 12 bzw. 15 aus einer äußeren Teilschicht 19 der Schicht 5 registriert wird. Zudem nimmt der relative Anteil des Lumineszenzlichts 12 aus der Teitschicht 19 mit zunehmendem Abstand der druckempfindlichen Moleküle 7 von der Oberfläche 1 zu. Wenn eine Schichtdicke 20 der Tallschicht 19 maximal so groß wie die oben angesprochene Mindestschichtdicke der Schicht 5 ist, ist sichergestellt, dass unabhängig von der tatsächlichen Dicke 4 der Schicht 5 das Lumineszenzlicht 12 bzw. 15 immer aus der Teilschicht 19 mit der konstanten Schichtdicke 20 registriert wird. Bei einer homogenen Zusammensetzung der druckempfindlichen Farbe 3 über der Oberfläche 1 sind damit überall homogene Randbedingungen für das Bestimmen des Drucks über der Oberfläche 1 geschaffen. Auch der Hintergrund der Teilschicht 19 Ist ohne Belang, da die Kamera 16 Ihn durch die Teilschicht 19 nicht "sieht". Deshalb kann die druckempfindliche Farbe 3 direkt auf die Oberfläche 1 aufgetragen werden, ohne dass diese Oberfläche 1 zunächst In Ihren optischen Eigenschaften, d. h. Insbesondere in ihrer Farbe, egallsiert werden muss. Die Partikel 9 In der druckempfindlichen Farbe 3 können Titandioxid sein, das im Stand der Technik in einer Abschirmschicht zur einheitlichen Einfärbung einer Oberfläche vor dem anschließenden Aufbringen einer druckempfindlichen Farbe verwendet wird.

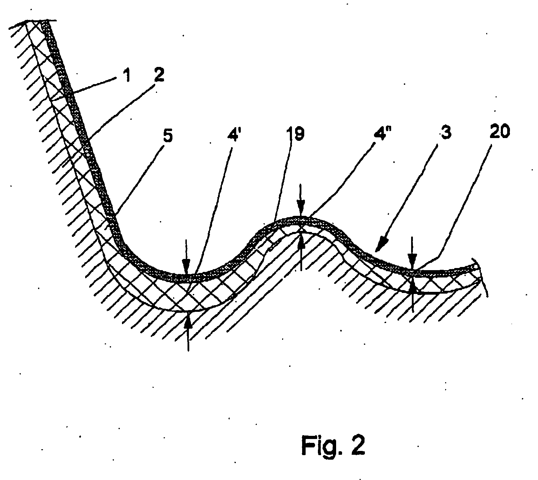

**Fig. 2** zeigt einen größeren Bereich der Oberfläche 1. Obwohl hier die druckempfindliche Farbe 3 In grundsätzlich gleicher Stärke aufgetragen wurde, variiert die Dicke 4 der Schicht 5 durch den Einfluss der Schwerkraft auf die Farbe 3. Konkret ist die Dicke 4' der Schicht 5 im Bereich einer Vertiefung der Oberfläche 1 besonders hoch, während die Dicke 4" der Schicht 5 im Bereich einer Erhöhung der Oberfläche 1 besonders gering ist. Da aber die Dicke 4 der Schicht 5 überall die Schichtdicke 20 der Teilschicht 19 übersteigt, aus der das Lumineszenzlicht 15 mit der Kamera 16 gemäß Fig. 1 erfässt wird, spielt die über der Oberfläche 1 variierende Schichtdicke 4 für die Bestimmung der Druckvertellung an der Oberfläche 1 mit der druckempfindlichen Farbe 3 keine Rolle. Dadurch, dass die Notwendigkeit entfällt, die Oberfläche 1 für die Bestimmung des Drucks außer durch die Auftragung der druckempfindlichen Farbe 3 vorzubehandeln und bei der Auftragung der druckempfindlichen Farbe 3 eine konstante Dicke 4 der Schicht 5 einzuhalten, wird die Vorbereitung von Objekten 2 für die Bestimmung der Druckverteilung über Ihrer Oberfläche 1 extrem vereinfacht. Dennoch ergeben sich keine Genaulgkeltselnbußen bei der Bestimmung der Druckverteilung über der Oberfläche 1.

### BEZUGSZEICHENLISTE

- 1: Oberfläche
- 2: Objekt
- 3: druckempfindliche Farbe
- 4: Dicke
- 5: Schicht
- 6: Matrix
- 7: druckempfindliches Molekül
- 8: Referenzsubstanz
- 9: Partikel
- 10: Anregungslicht
- 11: Anregungslichtquelle
- 12: Lumineszenzlicht
- 13: Sauerstoff
- 14: Umgebung
- 15: Lumineszenzlicht
- 16: Kamera
- 17: Filter
- 18: Filter
- 19: Telischicht
- 20: Schichtdicke

## Patentansprüche

1. Verfahren zur Bestimmung der Druckverteilung über einer Oberfläche, wobei eine Schicht aus einer druckempfindlichen Farbe auf die Oberfläche aufgebracht wird und wobei druckempfindliche Moleküle in der druckempfindlichen Farbe durch Anregungslicht zu Emission von Lumineszenzlicht angeregt werden, dessen Intensität von dem Druck über der Oberfläche abhängig ist und das mit Blickrichtung auf die Oberfläche von außen registriert wird, **dadurch gekennzeichnet, dass** die Halbtransmissionsdicke der Farbe (3), bei der die Farbe (3) 50 % der Intensität von einfallendem Licht durchlässt, bei der Wellenlänge des Anregungslichts (10) und/oder bei der Wellenlänge des Lumineszenzlichts (12) so eingestellt wird, dass nur Lumineszenzlicht (12) von solchen Anteilen der druckempfindlichen Moleküle (7) registriert wird, die sich in einer äußeren Teilschicht (19) der Schicht (5) aus der druckempfindlichen Farbe (3) auf der Oberfläche (1) befinden, wobei die äußere Teilschicht (19) der Schicht (5) eine Schichtdicke (20) von 1 bis 40 µm aufweist und wobei beim Aufbringen der Schicht (5) aus der druckempfindlichen Farbe (3) auf die Oberfläche (1) eine Mindestschichtdicke eingehalten wird, die mindestens so groß ist wie die Schichtdicke (20) der äußeren Teilschicht (19).

2. Verfahren nach Anspruch 1, **dadurch gekennzeichnet, dass** die Schicht (5) aus der druckempfindlichen Farbe (3) direkt auf die Oberfläche (1) aufgetragen wird.

3. Verfahren nach einem der Ansprüche 1 oder 2, **dadurch gekennzeichnet, dass** die druckempfindliche Farbe (3) mit einer homogenen Zusammensetzung auf die Oberfläche (1) aufgebracht wird.

4. Verfahren nach einem der Anspürche 1 bis 3, **dadurch gekennzeichnet, dass** Lumineszenzlicht (12) nur aus einer äußeren Teilschicht (19) der Schicht (5) mit einer Schichtdicke (20) von 5 bis 20 µm registriert wird.

5. Druckempfindliche Farbe zur Verwendung bei dem Verfahren nach einem der Ansprüche 1 bis 4, mit einer im ausgehärteten Zustand sauerstoffdurchlässigen Matrix und mit in die Matrix eingebetteten druckempfindlichen Molekülen, wobei die druckempfindlichen Moleküle bei Anregung durch Anregungslicht Lumineszenzlicht emittieren, dessen Intensität von einem Druck abhängt, **dadurch gekennzeichnet, dass** die Halbtransmissionsdicke der Farbe (3), bei der die Farbe (3) 50 % der Intensität von einfallendem Licht durchlässt, bei der Wellenlänge des Anregungslichts (10) und/oder bei der Wellenlänge des Lumineszenzlichts (12) maximal 20 µm beträgt.

6. Farbe nach Anspruch 5, **dadurch gekennzeichnet, dass** die Halbtransmissionsdicke der Farbe (3), bei der die Farbe (3) 50 % der Intensität von einfallendem Licht durchlässt, bei der Wellenlänge des Anregungslichts (10) und/oder bei der Wellenlänge des Lumineszenzlichts (12) maximal 10 µm beträgt.

7. Druckempfindliche Farbe, insbesondere nach Anspruch 5 oder 6, zur Verwendung bei dem Verfahren nach einem der Ansprüche 1 bis 4, mit einer im ausgehärteten Zustand sauerstoffdurchlässigen Matrix und mit in die Matrix eingebetteten druckempfindlichen Molekülen, wobei die druckempfindlichen Moleküle bei Anregung durch Anregungslicht Lumineszenzlicht emittieren, dessen Intensität von einem Druck abhängt, **dadurch gekennzeichnet, dass** in die Matrix (6) die Transmission der Farbe (3) bei der Wellenlänge des Anregungslichts (10) und/oder bei der Wellenlänge des Lumineszenzlichts (12) begrenzende, durch das Anregungslicht (10) nicht zur Lumineszenz angeregte Partikel (9) eingebettet sind.

8. Farbe nach Anspruch 7, **dadurch gekennzeichnet, dass** die Partikel (9) aus Titandioxid bestehen.

9. Farbe nach Anspruch 7 oder 8, **dadurch gekennzeichnet, dass** die Partikel (9) eine Teilchengröße kleiner als 1 µm aufweisen.

10. Farbe nach einem der Ansprüche 5 bis 9, **dadurch gekennzeichnet, dass** die Matrix (6) aus einem Silikonpolymer besteht, in das die druckempfindlichen Moleküle (7) in Form einer Pyrenverbindung, eines Pyrenderivats, einer Rutheniumverbindung, eines Rutheniumderivats, einer Porphyrinverbindung oder eines Porphyrinderivats eingebettet sind.

11. Farbe nach einem der Ansprüche 5 bis 10, **dadurch gekennzeichnet, dass** in die Matrix (6) eine Referenzsubstanz (8) eingebettet ist, die durch das Anregungslicht (10) zur Emission von Lumineszenzlicht (15) angeregt wird, dessen Intensität von keinem Druck in der Umgebung (14) der Referenzsubstanz abhängig ist.

12. Farbe nach Anspruch 11, **dadurch gekennzeichnet, dass** die Referenzsubstanz (8) Europium aufweist.

## Claims

1. Method of determining the pressure distribution over a surface, wherein a layer of a pressure-sensitive paint is applied to the surface and wherein pressure-sensitive molecules in the pressure-sensitive paint are excited for emission of luminescence light by excitation light, the intensity of the luminescence light depending on the pressure above the surface, and the luminescence light being externally registered with a viewing direction onto the surface, **characterised in that** the half transmission thickness of the paint (3) at which the paint (3) transmits 50 % of the intensity of incoming light is adjusted such that, at the wavelength of the excitation light (10) and/or at the wavelength of the luminescence light (12), only luminescence light (12) from such fractions of the pressure sensitive molecules (7) is registered, which are located in an outer partial layer (19) of the layer (5) of the pressure-sensitive paint on the surface (1), wherein the outer partial layer (19) of the layer (5) comprises a layer thickness (20) of 1 to 40 µm, and wherein, in applying the layer (5) of the pressure-sensitive paint (3) to the surface (1), a minimum layer thickness is kept which is at least as high as the layer thickness (20) of the outer partial layer (19).

2. Method of claim 1, **characterised in that** the layer (5) of the pressure-sensitive paint (3) is directly applied to the surface (1).

3. Method of any of the claims 1 or 2, **characterised in that** the pressure-sensitive paint (3) is applied to the surface (1) in a homogenous composition.

4. Method of any of the claims 1 to 3, **characterised in that** the luminescence light (12) is only registered from an outer partial layer (19) of the layer (5) having a layer thickness (20) of 5 to 20 µm.

5. Pressure-sensitive paint for use in the method according to any of the claims 1 to 4, comprising a matrix which is permeable to oxygen in its cured state, and molecules embedded in the matrix, wherein the pressure-sensitive molecules emit luminescence light upon excitation by excitation light, the intensity of the luminescence light depending on a pressure, **characterised in that** the half transmission thickness of the paint (3), at which the paint (3) transmits 50 % of the intensity of incoming light, is at maximum 20 µm at the wavelength of the excitation light (10) and/or at the wavelength of the luminescence light (12).

6. Paint according to claim 5, **characterised in that** the half transmission thickness of the paint (3) at which the paint (3) transmits 50 % of the intensity of incoming light, is at maximum 10 µm at the wavelength of the excitation light (10) and/or at the wavelength of the luminescence light (12).

7. Pressure-sensitive paint, particularly according to claim 5 or 6, for use in the method according to any of the claims 1 to 4, the paint comprising a matrix which is permeable to oxygen in its cured state, and pressure-sensitive molecules embedded in the matrix, wherein the pressure-sensitive molecules upon excitation by excitation light emit luminescence light, the intensity of the luminescence light depending on a pressure, **characterised in that** particles (9) which limit the transmission of the paint (3) at the wavelength of the excitation light (10) and/or at the wavelength of the luminescence light (12) and which are not excited for luminescence by the excitation light (10) are embedded in the matrix.

8. Paint according to claim 7, **characterised in that** the particles (9) consist of titanium dioxide.

9. Paint according to claim 7 or 8, **characterised in that** the particles (9) have a particle size smaller than 1 µm.

10. Paint according to any of the claims 5 to 9, **characterised in that** the matrix (6) consists of a silicone polymer in which the pressure-sensitive molecules (7) are embedded in form of a pyrene compound, a pyrene derivate, a ruthenium compound, a ruthenium derivate, a porphyrin compound, or a porphyrin derivate.

11. Paint according to any of the claims 5 to 10, **characterised in that** a reference substance (8) is embedded in the matrix (6), which is excited for emission of luminescence light (15) by the excitation light (10), the intensity of the luminescence light not being dependent on any pressure in the surroundings (14) of the reference substance.

12. Paint according to claim 11, **characterised in that** the reference substance (8) comprises europium.

## Revendications

1. Procédé de détermination de la distribution de pression sur une surface, une couche de couleur sensible à la pression étant appliquée sur la surface et des molécules sensibles à la pression, présentes dans la couleur sensible à la pression, étant excitées par une lumière d'excitation afin d'émettre une lumière luminescente dont l'intensité dépend de la pression exercée sur la surface et qui est captée de l'extérieur si l'on regarde en direction de la surface, **caractérisé en ce que** l'épaisseur de demi-transmission de la couleur (3), à laquelle la couleur (3) laisse passer 50% de l'intensité de la lumière incidente, est définie, à la longueur d'onde de la lumière d'excitation (10) et/ou à la longueur d'onde de la lumière luminescente (12), de telle sorte que seule la lumière luminescente (12) soit captée par la proportion de molécules sensibles à la lumière (7) qui se trouve dans une partie externe (19) de la couche (5) de couleur sensible à la lumière (3) sur la surface (1), la partie externe (19) de la couche (5) présentant une épaisseur de couche (20) comprise entre 1 et 40 µm et une épaisseur de couche minimale étant respectée lors de l'application de la couche (5) de couleur sensible à la pression (3) sur la surface (1), épaisseur qui est au moins égale à l'épaisseur de couche (20) de la partie externe (19).

2. Procédé selon la revendication 1, **caractérisé en ce que** la couche (5) de couleur sensible à la pression (3) est directement appliquée sur la surface (1).

3. Procédé selon l'une quelconque des revendications 1 ou 2, **caractérisé en ce que** la couleur sensible à la pression (3) est appliquée sur la surface (1) suivant une composition homogène.

4. Procédé selon l'une quelconque des revendications 1 à 3, **caractérisé en ce que** la lumière luminescente (12) n'est captée qu'à partir d'une partie externe (19) de la couche (5) avec une épaisseur (20) comprise entre 5 et 20 µm.

5. Couleur sensible à la pression à utiliser dans le procédé selon l'une quelconque des revendications 1 à 4, comportant une matrice perméable à l'oxygène et à l'état durci ainsi que des molécules sensibles à la pression incorporées à la matrice, les molécules sensibles à la pression émettant une lumière luminescente lors d'une excitation par la lumière d'excitation, lumière luminescente dont l'intensité dépend d'une pression, **caractérisée en ce que** l'épaisseur de demi-transmission de la couleur (3), à laquelle la couleur (3) laisse passer 50% de l'intensité de la lumière incidente, s'élève à 20 µm maximum à la longueur d'onde de la lumière d'excitation (10) et/ou à la longueur d'onde de la lumière luminescente (12).

6. Couleur selon la revendication 5, **caractérisée en ce que** l'épaisseur de demi-transmission de la couleur (3), à laquelle la couleur (3) laisse passer 50% de l'intensité de la lumière incidente, s'élève à 10 µm maximum à la longueur d'onde de la lumière d'excitation (10) et/ou à la longueur d'onde de la lumière luminescente (12).

7. Couleur sensible à la pression, en particulier selon la revendication 5 ou 6, à utiliser dans le procédé selon l'une quelconque des revendications 1 à 4, comportant une matrice perméable à l'oxygène et à l'état durci ainsi que des molécules sensibles à la pression incorporées à la matrice, les molécules sensibles à la pression émettant une lumière luminescente lors d'une excitation par la lumière d'excitation, lumière luminescente dont l'intensité dépend d'une pression, **caractérisée en ce que** des particules (9), non excitées par la lumière d'excitation (10) pour émettre une luminescence et limitant la transmission de la couleur (3) à la longueur d'onde de la lumière d'excitation (10) et/ou à la longueur d'onde de la lumière luminescente (12), sont incorporées à la matrice (6).

8. Couleur selon la revendication 7, **caractérisée en ce que** les particules (9) sont composées de dioxyde de titane.

9. Couleur selon la revendication 7 ou 8, **caractérisée en ce que** les particules (9) présentent une taille inférieure à 1 µm.

10. Couleur selon l'une quelconque des revendications 5 à 9, **caractérisée en ce que** la matrice (6) est composée d'un polymère en silicone dans lequel sont incorporées les molécules sensibles à la pression (7) sous la forme d'un composé de pyrène, d'un dérivé de pyrène, d'un composé de ruthénium, d'un dérivé de ruthénium, d'un composé de porphyrine ou d'un dérivé de porphyrine.

11. Couleur selon l'une quelconque des revendications 5 à 10, **caractérisée en ce qu'**une substance de référence (8) est incorporée à la matrice, laquelle substance est excitée par la lumière d'excitation (10) afin d'émettre de la lumière luminescente (15), dont l'intensité ne dépend d'aucune pression exercée dans le voisinage (14) de la substance de référence.

12. Couleur selon la revendication 11, **caractérisée en ce que** la substance de référence (8) comporte de l'europium.
